Europäisches Patentamt

European Patent Office

Office européen des brevets

(11) Veröffentlichungsnummer: **0 100 024**
**B1**

(12) # EUROPÄISCHE PATENTSCHRIFT

(45) Veröffentlichungstag der Patentschrift:
17.12.86

(51) Int. Cl.⁴: **B 01 D 53/34,** B 01 D 53/20

(21) Anmeldenummer: 83106855.6

(22) Anmeldetag: 13.07.83

(54) **Verfahren zur biologischen Reinigung von Abluft.**

(30) Priorität: 24.07.82 DE 3227678

(43) Veröffentlichungstag der Anmeldung:
08.02.84 Patentblatt 84/6

(45) Bekanntmachung des Hinweises auf die Patenterteilung:
17.12.86 Patentblatt 86/51

(84) Benannte Vertragsstaaten:
BE DE FR GB IT NL SE

(56) Entgegenhaltungen:
DE-A-2 237 929
DE-A-2 746 648
DE-A-3 123 155
DE-B-2 132 728
US-A-2 200 581

(73) Patentinhaber: BAYER AG, Konzernverwaltung RP
Patentabteilung, D-5090 Leverkusen 1 Bayerwerk
(DE)

(72) Erfinder: Baumgarten, Jörg, Dr., Henselweg 13,
D-5600 Wuppertal 1 (DE)
Erfinder: Mann, Theo, Dr., Blumenstrasse 18,
D-4018 Langenfeld (DE)
Erfinder: Schmidt, Friedrich, Dr., In den Birken 77,
D-5600 Wuppertal (DE)

EP 0 100 024 B1

## Beschreibung

Die Erfindung betrifft ein Verfahren zur biologischen Reinigung von Abluft, bei dem Abluft und Wasser einem Füllkörper enthaltenden Reaktionsturm mit einer zum biologischen Abbau der zu entfernenden Abluftinhaltstoffe befähigten, auf den Füllkörpern aufgewachsenen Mikroorganismenkultur zugeführt werden. Dabei wird das Wasser in einer solchen Menge zugeführt, daß einerseits die Feuchthaltung der Mikroorganismen gerade gewährleistet ist und andererseits das Wasser ohne Erfüllung der Zwischenräume der Füllkörper im Reaktionsturm herabströmt.

Verfahren dieser Art sind aus DE-OS 2 237 929 und aus US-PS 2 200 581 bekannt. Als Füllkörper für den Reaktionsturm werden hier Gesteinsbrocken, Porzellanringe, unregelmäßige Kunststoffkörper oder dergleichen benutzt, auf deren Oberfläche die Mikroorganismenkultur aufwächst. Voraussetzung für eine gleichbleibend sichere Betriebsweise mit einem hohen Abscheidegrad sind stabile Lebensbedingungen für die auf dem Füllkörper aufgewachsene Mikroorganismenkultur. Die Erhaltung gleichbleibender Lebensbedingungen stellt aber unter Umständen in mikrobiologischer und verfahrenstechnischer Hinsicht ein schwieriges Problem dar, vor allem, wenn es sich um schwer abbaufähige Abluftinhaltstoffe in der chemischen Industrie handelt.

Hier setzt die Erfindung an. Es lag die Aufgabe zugrunde, ein Verfahren zu entwickeln, mit dem organische, gasförmige, in verhältnismäßig geringen Konzentrationen in den Abgasen spezieller chemischer Prozesse auftretende Schadstoffe auf biologischem Wege mit einem gleichbleibend hohen Wirkungsgrad entfernt werden können.

Diese Aufgabe wird, ausgehend von dem eingangs beschriebenen Verfahren, erfindungsgemäß dadurch gelöst, daß im Reaktionsturm Füllkörper verwendet werden, die mit synthetischen, hochmolekularen, anionischen Polyelektrolyten vorbehandelt sind, so daß sie an der Oberfläche positive Ladungen tragen. Es hat sich gezeigt, daß solche positiven Ladungen die Aktivität der Mikroorganismen günstig beeinflussen. Der Grund für die erhöhte Wirksamkeit liegt darin, daß die so vorbehandelten Füllkörper einen größeren Einfangquerschnitt für anionische oder polarisierbare Schadstoffe aufweisen. Die Abscheidewirkung wird dadurch global verbessert.

Die Füllkörper bestehen dabei vorzugsweise aus einer losen Schüttung von im wesentlichen kugelförmigen Trägerkörpern mit einer Dichte von weniger als 0,5 g/cm³ und einer Raumerfüllung der Schüttung zwischen 0,5 und 0,74. Die zu reinigende Abluft wird zusammen mit dem Wasser dem Reaktionsturm vorteilhaft im Gleichstrom von oben nach unten durch den mit solchen Füllkörpern beschickten Reaktionsturm hindurchgeführt.

Dabei können die Trägerkörper, die im wesentlichen Kugelgestalt haben, auf ihrer Oberfläche eine Vielzahl von Noppen aufweisen, so daß der Abstand in der losen Schüttung vergrößert wird und die Raumerfüllung verringert wird.

Als Trägerkörper eignen sich z. B. Hohlkörper aus Polypropylen, Polyamid oder Polyethylen. Geeignet sind Körper mit angenäherter Kugelgestalt mit einem Durchmesser von 15 bis 50 mm Durchmesser, vorzugsweise 20 bis 35 mm Durchmesser.

Es wurde gefunden, daß eine Schüttung von Trägerkörpern mit im wesentlichen Kugelgestalt besonders günstige Bedingungen für den Obergang Gas-Flüssigkeit auf der Trägerkörperoberfläche schafft, indem die Kugelschüttung für den Durchgang des Abgases eine günstige Verteilung von engen und weiten Passagen liefert, die eine ständig wechselnde Strömungsrichtung und Geschwindigkeit dem Abgas aufprägen. Die Dichte der Trägerkörper soll vorzugsweise weniger als 0,5 g/cm³, besonders bevorzugt zwischen 0,1 und 0,2 g/cm³, betragen.

Im Laufe des Betriebes reichert sich die Biomasse auf den Oberflächen der Trägerkörper an. Demnach muß in regelmäßigen Abständen überschüssige Biomasse entfernt werden. Hierzu wird gemäß der vorliegenden Erfindung der Reaktionsraum mit Wasser gespült, wobei die Menge des Spülwassers so bemessen ist, daß der Reaktionsraum zumindest teilweise geflutet wird, so daß die Trägerkörper aufgrund ihres Auftriebs in Bewegung zueinander versetzt werden. Dabei wird überschüssige Biomasse von den Oberflächen abgelöst und mit dem Spülwasser nach unten ausgetragen. Aufgrund der im wesentlichen kugeligen Gestalt der Trägerkörper kommt es nicht zu einem Verhaken oder Verklemmen der Trägerkörper gegeneinander, die ein Aufschwemmen bei Flutung durch das Spülwasser verhindern würden.

Zu große Noppen auf den im wesentlichen kugelförmigen Trägerkörpern würden ein Verhaken begünstigen. Die Noppen sollen daher möglichst klein gewählt sein. Bevorzugt sollen sie solche Abmessungen aufweisen, daß die dichtesmögliche Packung der Schüttung eine Raumerfüllung von mehr als 0,5 aufweist. Ferner sollen die Trägerkörper im wesentlichen starr sein. Polystyrolschaumkugeln sind weniger geeignet, da diese aufgrund ihrer elastischen Verformbarkeit zum Verklemmen neigen und daher die Entfernung überschüssiger Biomasse erschweren.

Dem Berieselungswasser für die Trägerkörper werden vorzugsweise Nährstoffe für die Mikroorganismen zugesetzt, da die Konzentrationen der Abgasschadstoffe im allgemeinen zu niedrig sind, um die Biomasse aufrechtzuerhalten. Die Nährstoffe sollen vorzugsweise Substanzen mit geringem Dampfdruck sein. Sie stimmen daher mit den aus der Abluft zu entfernenden Stoffen, die ja in der Dampfphase vorliegen, nicht überein. Jedoch müssen die Nährstoffe so gewählt werden, daß ihr Abbaumechanismus durch Mikroorganismen über gleiche oder ähnliche Abbauschritte erfolgt.

Zur Entfernung schwefelhaltiger organischer Schadstoffe aus Abgas, z.B. Sulfide, Disulfide, Polysulfide, Mercaptane, Thioether, werden vorzugsweise wasserlösliche organische Stoffe wie Alkyl-Thiophosphate, z.B. Dimethylthiophosphat, als Nährstoffe eingesetzt.

Zur Entfernung organischer Chlorverbindungen aus dem Abgas werden vorzugsweise wasserlösliche organische Chlorverbindungen wie z.B. Chloressigsäure und/oder Metachlorbenzoesäure als Nährstoffe eingesetzt. Zum Abbau von aromatischen Verbindungen wie Toluol und/oder Xylol werden Benzoesäure oder Salizylsäure als Nährstoffe zugesetzt.

Zum Abbau solcher an sich schwer abbaubarer Abluftinhaltstoffe werden vorzugsweise speziell adaptierte Mikroorganismen eingesetzt. Diese können zunächst durch Selektionsverfahren in bekannter Weise gezüchtet werden. Die Mikroorganismen werden dann auf die Trägerkörper aufgebracht und in den Reaktionsraum eingebracht.

Sind einmal mit Mikroorganismen belegte Trägerkörper vorhanden, so reicht es zur Vermehrung der mit Mikroorganismen belegten Trägerkörper, unbewachsene Trägerkörper in den Reaktionsraum zusätzlich einzuführen, wobei diese beim Betrieb der biologischen Abluftreinigungsanlage bewachsen werden. Die bewachsenen Trägerkörper können weiteren Abluftreinigungsanlagen zugeführt werden.

Die Höhe der Schüttung der Trägerkörper im Reaktionsraum beträgt vorzugsweise zwischen 0,7 bis 2 m, besonders bevorzugt 0,7 bis 1,5 m.

Das Berieselungswasser wird in einer Menge von 150 bis 400, vorzugsweise 200 bis 300 l pro Stunde und $m^2$ Querschnitt der Schüttung zugeführt. Der Nährstoffgehalt des Berieselungswassers soll oberhalb von 50 ppm liegen. Nährstoffgehalte von oberhalb 500 ppm führen zu einer zu starken Vermehrung der Mikroorganismen, so daß zu häufiges Entfernen überschüssiger Biomasse notwendig ist.

Die Temperatur des Berieselungswassers soll zwischen 25 und 35° C liegen. Oberhalb 37° C wird die Abbauleistung merklich gestört.

Der pH-Wert des Berieselungswassers soll zwischen 6,0 und 9, vorzugsweise 6,0 und 7,5, liegen.

Das Berieselungswasser wird vorzugsweise im Umlauf geführt, wobei jeweils vor der Rückführung des Berieselungswassers Nährstoffzugabe und gegebenenfalls pH-Einstellung erfolgt.

Als Berieselungswasser kann auch Abwasser eingesetzt werden, wobei vorzugsweise Abwässer mit hohem CSB/BSB-Verhältnis eingesetzt werden, so daß die zum Abbau schwer abbaubarer Substanzen adaptierten Mikroorganismen nicht von leicht vermehrbaren Mikroorganismen, die vorzugsweise zum Abbau nur leicht abbaubarer Substanzen befähigt sind, überwachsen werden.

Es kommen daher verhältnismäßig geringe Mengen speziell verunreinigter Abwässer, wie sie in speziellen Anlagen der chemischen Industrie anfallen, in Frage. Die speziell verunreinigten Abwässer werden vorzugsweise in Mengen von 10 bis 30 % dem im Kreislauf geführten Berieselungswasser zugeführt, wobei entsprechende Mengen jeweils ausgeschleust werden.

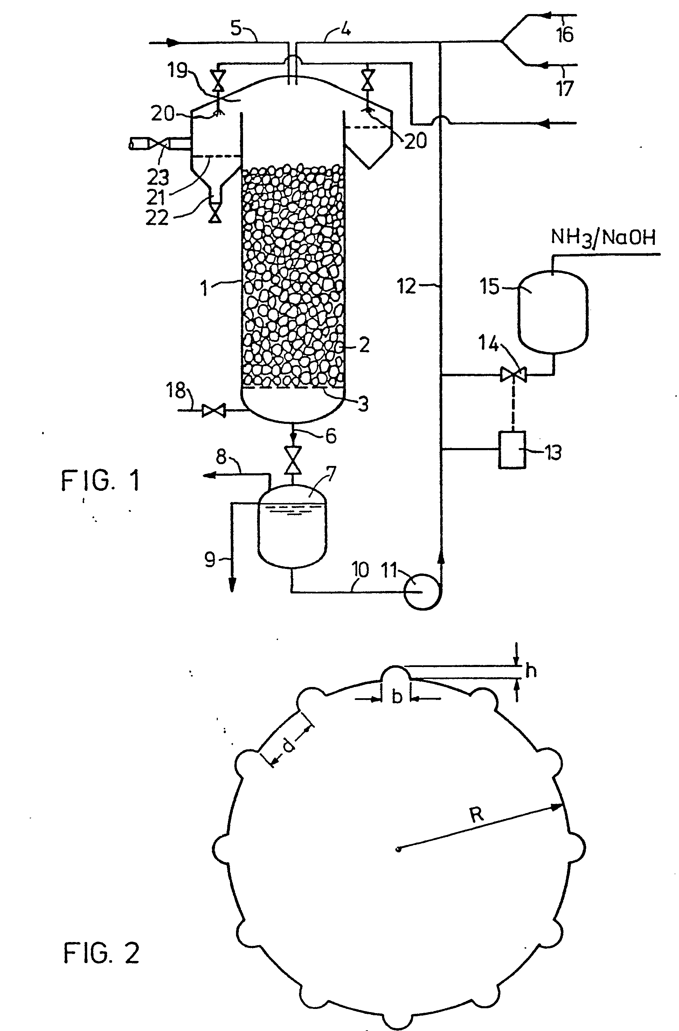

Das erfindungsgemäße Verfahren wird anhand der anliegenden Figuren 1 und 2 näher erläutert:

Fig. 1 zeigt eine Vorrichtung zur Durchführung des erfindungsgemäßen Verfahrens.

Fig. 2 zeigt einen erfindungsgemäßen kugelförmigen Trägerkörper mit Noppen.

Fig. 1 zeigt einen Reaktionsturm 1, in dem sich die im wesentlichen kugelförmigen, mit Mikroorganismen bewachsenen Trägerkörper 2 befinden. Die Trägerkörper sind in einer losen Schüttung angeordnet, die auf einem im unteren Teil des Reaktionsturmes 1 angeordneten Rost 3 aufliegen. Der Reaktionsturm 1 ist nicht maßstabsgerecht gezeichnet. Der Durchmesser des Reaktionsturmes 1 sollte in einer technischen Anlage etwa der Hälfte bis zum Doppelten der Höhe der Schüttung entsprechen. Durch eine Leitung 4 wird das Berieselungswasser zugeführt. Durch Leitung 5 wird die zu reinigende Abluft zugeführt. Gereinigte Abluft und Berieselungswasser treten im Boden des Reaktionsturmes 1 durch die Leitung 6 in einen Trennbehälter 7 ein. Die gereinigte Abluft wird durch Leitung 8 abgelassen. Durch Leitung 9 läuft überschüssiges Berieselungswasser ab. Aus dem Trennbehälter 7 wird im Boden über Leitung 10 und pumpe 11, sowie Leitung 12 das Berieselungswasser zurückgeführt. In Leitung 12 wird über die pH-Meßvorrichtung 13 der pH-Wert gemessen. Die Meßsonde 13 wirkt auf das Ventil 14, über das aus einem Behälter 15 Ammoniak oder Natriumhydroxidlösung zur pH-Einstellung zugeführt werden kann. Über Leitung 16 werden dem Berieselungswasser ferner Nährund Mineralstoffe zugeführt. Über Leitung 17 kann zusätzlich spezielles Abwasser zugeführt werden.

Hat sich nach längerer Betriebsweise auf den Trägerkörpern 2 so viel überschüssige Biomasse gebildet, daß der Abluftdurchgang durch die Schüttung behindert wird, so wird nach Schließung des Ventils in Leitung 6 über Leitung 18 der Reaktionsturm geflutet, wobei die Trägerkörper 2 aufschwimmen und gegeneinander bewegt werden. Dabei löst sich überschüssige Biomasse ab. Die überschüssige Biomasse wird mit dem durchströmenden Flutungswasser, das am Überlauf 19 überläuft, ausgetragen. Zur intensiveren Entfernung der Biomasse kann die Flutung so erfolgen, daß die Kugeln ebenfalls am Überlauf 19 ausgetragen werden und durch Waschen mit über Düsen 20 zugeführtes Spülwasser gereinigt werden. Die am Überlauf 19 austretenden Trägerkörper 2 fallen auf den mit Gefälle angeordneten Rost 21 und rollen zur tiefsten Stelle, an der eine Entnahmevorrichtung 23 für die Trägerkörper vorgesehen ist. Das Spülwasser mit der überschüssigen Biomasse wird unterhalb des Rostes durch ein Ventil 22 abgeführt.

Fig. 2 zeigt einen besonders bevorzugten, annähernd kugelförmigen Trägerkörper, der aus einer Kugel mit dem Radius R besteht, auf deren Oberfläche Noppen angeordnet sind. Die Höhe h der Noppen soll etwa 1/5 bis 1/10 des Radius R der Kugel betragen. Die Basis b der Noppen soll das 1- bis 3-fache der Höhe h der Noppen betragen. Der Abstand der Noppen auf der Oberfläche der Kugel d beträgt vorzugsweise das 2- bis 5-fache der Basis b der Noppen. Die Noppen können etwa halbkugelförmige Gestalt haben. Ebenfalls geeignet sind kegel- oder kegelstumpfförmige Noppen. Die Anordnung auf der Oberfläche der Kugel kann in Form von regelmäßigen Fünfecken, oder abwechselnd in Form von Quadraten und Sechsecken, wobei im Mittelpunkt des Sechsecks jeweils ebenfalls eine Noppe vorgesehen ist, erfolgen. Geeignet ist jede regelmäßige geometrische Figur, die eine gleichmäßige Verteilung der Noppen auf der Oberfläche der Kugeln gewährleistet.

Die Erfindung wird anhand des nachfolgenden Beispiels näher erläutert:

**Beispiel**

Es wird eine Vorrichtung entsprechend Figur 1 eingesetzt. Der Reaktionsturm hatte einen Durchmesser von 400 mm, die Schüttung eine Höhe von 800 mm. Als Trägerkörper wurden Polypropylenkugeln, Durchmesser 20 mm, Dichte 0,2 g/cm$^3$ eingesetzt. Die Hohlkugeln waren von Mikroorganismen bewachsen, die an das nachfolgende Berieselungswasser über einen längeren Zeitraum adaptiert waren.

Auf diese Schüttung wurden 30 l/h im Kreislauf gefahrenes Berieselungswasser gegeben, dem 6 l/h einer Nährlösung zugepumpt wurden mit folgender Zusammensetzung:

Dimethylthiophosphat 100 ppm
Chloressigsäure 50 ppm
3-Chlorbenzoesäure 50 ppm
Toluol 100 ppm
Xylol 100 ppm
und folgende anorganische Nährsalze für Fermentationsprozesse in üblicher Konzentration:
Ammoniumsulfat, Magnesiumsulfat, Calciumchlorid und Kaliumphosphoat.

Die Reinigungsleistung des Reaktionsturmes, dem 2000 l/h Abluft zugeführt wurden, einschließlich der Meßwerte in zwei aufeinanderfolgenden Tagen des Zu- und Ablaufes des Berieselungswassers ist in folgender Tabelle zusammengefaßt:

| | Abluft (2000 l/h) | | | |
|---|---|---|---|---|
| | Eingang mg/m³ | Ausgang mg/m³ | Eingang mg/m³ | Ausgang mg/m³ |
| Dimethylsulfid | 62,0 | 1,0 | 18,6 | 1,3 |
| Aceton | 58,0 | 0,8 | 82,0 | 0,4 |
| Toluol | 154,0 | 4,0 | 274,0 | 1,6 |
| Dimethyldisulfid | 281,5 | 2,6 | 148,0 | 3,2 |
| Xylol | 71,0 | 22,1 | 27,0 | 19,0 |
| Chlorbenzol | 3,2 | < 0,3 | 1,4 | < 0,6 |
| Methylenchlorid | 239,0 | 45,5 | 52,8 | 34,5 |
| Methylglykol | 12,0 | < 0,9 | 132,0 | < 1,8 |

| | Wäßrige Lösung | | | |
|---|---|---|---|---|
| TOC | 227,0 | 97,0 | 190,0 | 102,0 |
| CSB | 720,0 | 303,0 | 486,0 | 152,0 |
| pH | 7,0 | 7,0 | 6,8 | 6,8 |

**Patentansprüche**

1. Verfahren zur biologischen Reinigung von Abluft, bei dem Abluft und Wasser einen Füllkörper enthaltenden Reaktionsturm mit einer zum biologischen Abbau der zu entfernenden Abluftinhaltstoffe befähigten, auf den Füllkörpern aufgewachsenen Mikroorganismenkultur zugeführt werden, wobei das Wasser in einer solchen Menge zugeführt wird, die einerseits zur Feuchthaltung der Mikroorganismen ausreicht und andererseits ohne Erfüllung der Zwischenräume der Füllkörper im Reaktionsturm herabströmt, dadurch gekennzeichnet, daß Füllkörper verwendet werden, die mit synthetischen hochmolekularen anionischen Polyelektrolyten vorbehandelt sind, so daß sie an der Oberfläche positive Ladungen tragen.

2. Verfahren nach Anspruch 1, dadurch gekennzeichnet, daß der Füllkörper aus einer losen Schüttung von im wesentlichen kugelförmigen Trägerkörpern für die Mikroorganismen besteht, wobei die Trägerkörper eine Dichte von weniger als 0,5 g/cm³ aufweisen und die Schüttung der Trägerkörper eine Raumerfüllung von weniger als 0,74 und vorzugsweise mehr als 0,5 aufweist.

3. Verfahren nach Anspruch 1 und 2, dadurch gekennzeichnet, daß Abluft und Abwasser gleichsinnig von oben nach unten durch den Reaktionsturm geführt werden.

4. Verfahren nach Anspruch 1 bis 3, dadurch gekennzeichnet, daß das Wasser dem Reaktionsturm in einer Menge von 150 bis 400, vorzugsweise 200 bis 300 l/h und m² Querschnitt der Schüttung zugeführt wird.

5. Verfahren nach Anspruch 1 bis 4, dadurch gekennzeichnet, daß der pH-Wert des Wassers im Bereich von 6 bis 9, vorzugsweise zwischen 6,0 und 7,5, eingestellt wird.

6. Verfahren nach Anspruch 1 bis 5, dadurch gekennzeichnet, daß als Trägerkörper mit Noppen versehene Kugeln verwendet werden.

7. Verfahren nach Anspruch 1 bis 5, dadurch gekennzeichnet, daß zur Entfernung schwefelhaltiger organischer Schadstoffe aus dem Abgas wasserlösliche Thiophosphate als Nährstoffe eingesetzt werden.

8. Verfahren nach Anspruch 1 bis 5, dadurch gekennzeichnet, daß zur Entfernung organischer Chlorverbindungen aus dem Abgas Chloressigsäure und/oder Metachlorbenzoesäure als Nährstoffe eingesetzt werden.

9. Verfahren nach Anspruch 1 bis 5, dadurch gekennzeichnet, daß zur Entfernung aromatischer Verbindungen Benzoesäure und/oder Salizylsäure als Nährstoffe eingesetzt werden.

10. Verfahren nach einem der Ansprüche 1 bis 9, dadurch gekennzeichnet, daß der Reaktionsraum zur Entfernung von überschüssiger gebildeter Biomasse mit Wasser derart geflutet wird, daß die Trägerkörper aufgrund ihres Auftriebs in Bewegung zueinander versetzt werden und überschüssige Biomasse ausgespült wird.

**Claims**

1. Process for the biological purification of exhaust air in which exhaust air and water are introduced into a reaction tower which contains packings and a culture of microorganisms which has grown on the packings and is capable of biologically degrading the exhaust air constituents to be removed, the water being introduced in such a quantity which on the one hand is sufficient for keeping the microorganisms moist and on the other hand flows downwards ibthe reaction tower without filling the spaces between the packings, characterised in that packings are used which have been pretreated with synthetic high molecular weight anionic polyelectrolytes, with the result that they carry positive charges on their surface.

2. Process according to Claim 1, characterised in that the packing consists of a loose bed of essentially spherical support elements for the microorganisms, the support elements having a density of less than 0.5 g/cm³ and the bed of support elements having a volume ratio of less than 0.74 and preferably greater than 0.5.

3. Process according to Claim 1 and 2, characterised in that exhaust air and effluent are passed through the reaction tower in the same direction from the top to the bottom.

4. Process according to Claim 1 to 3, characterised in that the water is introduced into the reaction tower in a quantity of 150 to 400, preferably 200 to 300 l/h and m² cross-section of the bed.

5. Process according to Claim 1 to 4, characterised in that the pH value of the water is adjusted to within the range from 6 to 9, preferably between 6.0 and 7.5.

6. Process according to Claim 1 to 5, characterised in that spheres provided with nubs are used as the support elements.

7. Process according to Claim 1 to 5, characterised in that water-soluble thiophosphates are used as the nutrients for the reboval of sulphur-containing organic pollutants from the exhaust air.

8. Process according to Claim 1 to 5, characterised in that chloroacetic acid and/or meta chlorobenzoic acid are used as the nutrients for the removal of organic chlorine componds from the exhaust air.

9. Process according to Claim 1 to 5, characterised in that benzoic acid and/or salicylic acid are used as the nutrients for the removal of aromatic compounds.

10. Process according to one of Claims 1 to 9, characterised in that, for the removal of excessive biomass which has formed, the reaction space is flooded with water in such a manner that the support elements, owing to their buoyancy, are set in motion in relation to each other and excessive biomass is washed out.

## Revendications

1. Procédé d'épuration biologique d'air d'évacuation, dans lequel de l'air d'évacuation et de l'eau sont transférés dans une tour de réaction contenant des corps de remplissage, dotée d'une culture de microorganismes se développant sur les corps de remplissage, apte à la dégradation biologique des substances à éliminer de l'air d'évacuation, l'eau étant amenée en une quantité choisie de manière qu'elle suffise, d'une part, à l'entretien de l'humidité pour les micro-organismes et qu'elle s'écoule, d'autre part, en courant descendant sans combler les intervalles entre les corps de remplissage dans la tour de réaction, caractérisé en ce qu'on utilise des corps de remplissage qui sont préalablement traités avec des polyélectrolytes anioniques synthétiques de haut poids moléculaire, afin qu'ils portent des charges positives à leur surface.

2. Procédé suivant la revendication 1, caractérisé en ce que le corps de remplissage est constitué d'une masse déversée en vrac de corps de support principalement sphériques pour les micro-organismes, les corps de support ayant une masse volumique inférieure à 0,5 g/cm$^3$ et la masse en vrac de corps de support ayant un encombrement spatial de moins de 0,74 et de préférence de plus de 0,5.

3. Procédé suivant les revendications 1 et 2, caractérisé en ce que l'air d'évacuation et des eaux usées traversent dans le même sens de haut en bas la tour de réaction.

4. Procédé suivant les revendications 1 à 3, caractérisé en ce que l'eau est amenée à la tour de réaction en une quantité de 150 à 400, de préférence de 200 à 300 l/h et par m$^2$ de section transversale de la masse en vrac.

5. Procédé suivant les revendications 1 à 4, caractérisé en ce que la valeur de pH de l'eau est ajustée dans l'intervalle de 6 à 9 et de préférence entre 6,0 et 7,5.

6. Procédé suivant les revendications 1 à 5, caractérisé en ce qu'on utilise comme corps de support des sphères munies de boutons.

7. Procédé suivant les revendications 1 à 5, caractérisé en ce qu'on utilise des thiophosphates hydrosolubles comme substances nutritives pour éliminer du gaz d'évacuation des substances organiques nocives contenant du soufre.

8. Procédé suivant les revendications 1 à 5, caractérisé en ce qu'on utilise comme substances nutritives l'acide chloracétique et/ou l'acide métachlorobenzoïque pour l'élimination de composés organiques chlorés du gaz d'évacuation.

9. Procédé suivant les revendications 1 à 5, caractérisé en ce qu'on utilise l'acide benzoïque et/ou l'acide salicylique comme substances nutritives pour l'élimination de composés aromatiques.

10. Procédé suivant l'une des revendications 1 à 9, caractérisé en ce que la chambre de réaction est remplie d'eau pour l'élimination de la biomasse formée en excès de manière que les corps de support soient mis en mouvement les uns par rapport aux autres en raison de la force ascensionnelle et que la biomasse en excès soit éliminée par rinçagé.

FIG. 1

FIG. 2